# EUROPEAN PATENT SPECIFICATION

(11) **EP 4 302 660 B1**
(45) Date of publication and mention of the grant of the patent: **21.01.2026**
(21) Application number: 23183486.2
(22) Date of filing: 05.07.2023
(51) Int. Cl.: A47J 36/24

(54) **MILK WARMER**
MILCHWÄRMER
CHAUFFE-LAIT

(30) Priority: 17.01.2023 CN 202320173244 U
(43) Date of publication of application: 10.01.2024
(73) Proprietor: Shenzhen DeOne Innovation Technology Co., Ltd, Shenzhen, Guangdong 518129 (CN)
(72) Inventor: Cai, Jiongjun, Shenzhen, 518129 (CN)
(74) Representative: Plavsa, Olga

(56) References cited:
- WO-A1-2021/022329

## Description

### TECHNICAL FIELD

The present disclosure relates to a technical field of household electric appliances, and in particular to a milk warmer.

### BACKGROUND

A milk warmer is mainly configured to preserve heat and heat a liquid medium such as milk, and brewed milk, so that a temperature of the liquid medium is suitable for infants and young children to drink. In the prior art, the milk warmer generally adopts a water-bath heating method, and the liquid medium and the like are put into a feeding bottle, and then the feeding bottle is placed in water to be heated. However, since the water-bath heating method is an indirect heat transfer method, a heat conduction of the milk warmer is slow, and a long heating time is needed, resulting in poor user experience. Another type of milk warmer in the market can directly heat the liquid medium, but since a portion of the milk warmer directly contacting the liquid medium is fixedly connected to a base of the milk warmer and cannot be detached, the portion of the milk warmer directly contacting the liquid medium cannot be washed or thoroughly disinfected, resulting in cleaning dead corners and health hazards, which is not good for health of the infants and the young children.

WO2021022329A1 disclosed a fluid or food warming apparatus, comprising a bottle, a lid, a heat exchange and a dock. The bottle having an opening and the lid is reversibly attachable to the bottle over the opening. The heat exchange member is reversibly attachable to the bottle and extending inwardly through the opening, such that the heat exchange member is in contact with the fluid or food retained within the bottle. The dock includes an upstand containing a heating element, wherein the heat exchange member is dimensioned to engage over the upstand, whereby the fluid or food can be heated by operation of the heating element.

### SUMMARY

The present disclosure aims to solve at least one of deficiencies in the prior art, and provides a milk warmer that quickly heats a liquid medium. A heat conduction component thereof directly contacting with the liquid medium can be directly rinsed and disinfected. The milk warmer has a simple and compact structure, and has a good practicality. The invention is set out in the appended set of claims.

Compared with the prior art, the present disclosure provides the milk warmer including the base assembly and the heating assembly. The heating assembly includes the heat conduction component. The heat conduction component directly contacts the liquid medium in the feeding bottle. The liquid medium in the feeding bottle is heated by directly heating the heat conduction component. When the heat conduction component heats up, the liquid medium in the feeding bottle which directly contacts the heat conduction component is rapidly heated to reach a temperature suitable for drinking, thereby greatly improving heating efficiency. Meanwhile, since the heating assembly is detachably connected to the base assembly, the heat conduction component directly contacting with the liquid medium in the feeding bottle is detachable for washing and cleaning or being directly disinfected in a disinfection cabinet, which eliminates health dead corners and health risks. The milk warmer further includes the adapter. The milk warmer is adapted to openings of different feeding bottles through the adapter, and has a wide range of the application. In addition, the milk warmer has a simple and compact structure, which makes it easy to carry and makes cost low.

### BRIEF DESCRIPTION OF DRAWINGS

In order to clearly illustrate technical solutions of the present disclosure, the present disclosure will be described in detail below with reference to the accompanying drawings. It is clear that, the accompanying drawings described below only show some embodiments of the present disclosure, and for the person of ordinary skill in the art, other related drawings can be obtained according to the accompanying drawings without any creative effort.
FIG. 1 is an exploded perspective schematic diagram of a milk warmer according to one embodiment of the present disclosure.
FIG. 2 is a structural schematic diagram of the milk warmer for heating a feeding bottle according to one embodiment of the present disclosure.
FIG. 3 is another exploded perspective schematic diagram of the milk warmer according to one embodiment of the present disclosure.
FIG. 4 is a structural schematic diagram of the milk warmer according to one embodiment of the present disclosure.
FIG. 5 is a front schematic diagram of the milk warmer according to one embodiment of the present disclosure.
FIG. 6 is a cross-sectional schematic diagram taken along the line A-A shown in FIG. 5.
FIG. 7 is an enlarged schematic diagram of portion B shown in FIG. 6.

Reference numbers in the drawings: 1-base assembly; 11-base upper shell; 110-protrusion; 111-annular groove; 12-base middle shell; 120-inner concave portion; 13-base lower shell; 14-conductive terminals; 15-battery compartment; 151-second installing position; 152-third installing position; 16-battery; 17-lamp plate; 18-lamp plate bracket; 19-control module; 20-button; 2-heating assembly; 200-heat conduction component; 21- heating sleeve; 211-first annular platform; 212-second annular platform; 213-first installing position; 22-heating unit; 23-heating inner housing component; 230-heating groove; 231-heating upper shell; 232-heating lower shell; 24-heat insulating component; 25-temperature sensing component; 26-protective sleeve; 27-conductive ring plate; 28-sealing component; 3-adapter; 31-annular protrusion; 4-feeding bottle.

### DETAILED DESCRIPTION OF EMBODIMENTS

In order to clearly illustrate purposes, technical solutions, and advantages of the present disclosure, the present disclosure will be described in detail below with reference to the accompanying drawings and embodiments. It should be understood that the specific embodiments described herein are merely used to explain the present disclosure, and should not be construed as being limited to protection scope of the present disclosure set forth herein.

It should be noted that the terms "install", and "connect" should be understood in a broad sense, for example, the "install" may be directly installed, or may be indirectly installed through a centering component or a centering structure, and the "connect" may be directly connected, or may be indirectly connected through a centering component or a centering structure.

Moreover, in the embodiments of the present disclosure, orientation or position relationships indicated by the terms such as "longitudinal", "transverse", "length", "width", "thickness", "upper", "lower", "front", "rear", "left", "right", "vertical", "horizontal", "top", and "bottom" are based on orientation or position relationships or regular place states or use states shown in the accompanying drawings, and are used only for ease and brevity of illustration and description, rather than indicating or implying that the mentioned structures, features, apparatus or component must have a particular orientation or must be constructed and operated in a particular orientation. Therefore, such terms should not be construed as limiting of the present disclosure. In the description of the present disclosure, unless otherwise specified, a "a plurality" means two or more than two.

Each specific technical feature and embodiment described in the specific embodiments may be combined in any suitable manner without contradiction, for example, different embodiments may be formed by combining different specific technical features/embodiments, and in order to avoid unnecessary repetition, various possible combinations of the specific technical features/embodiments in the present disclosure are not described otherwise.

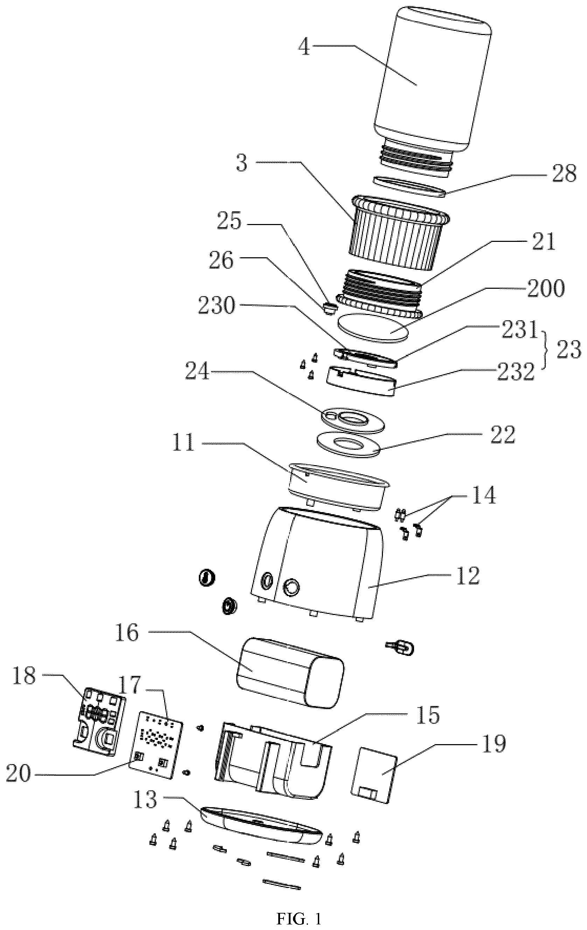

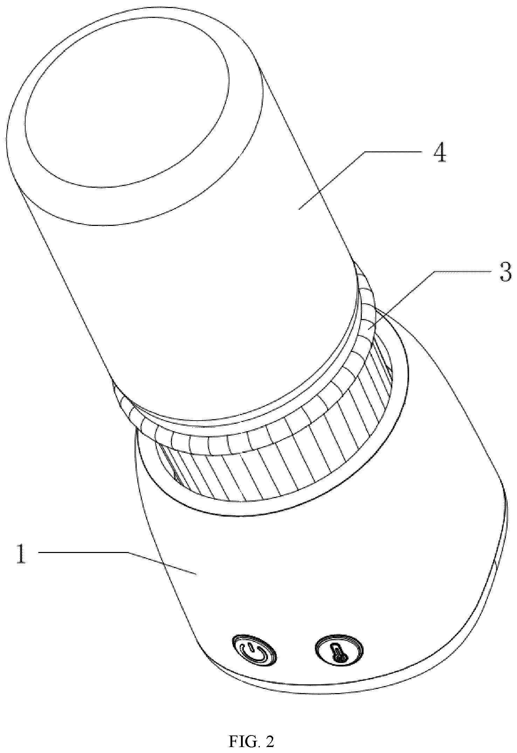

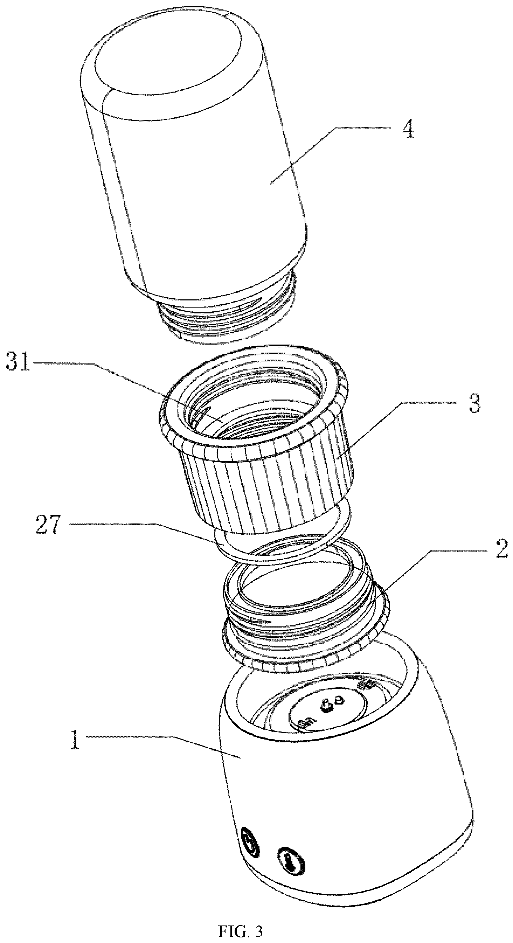

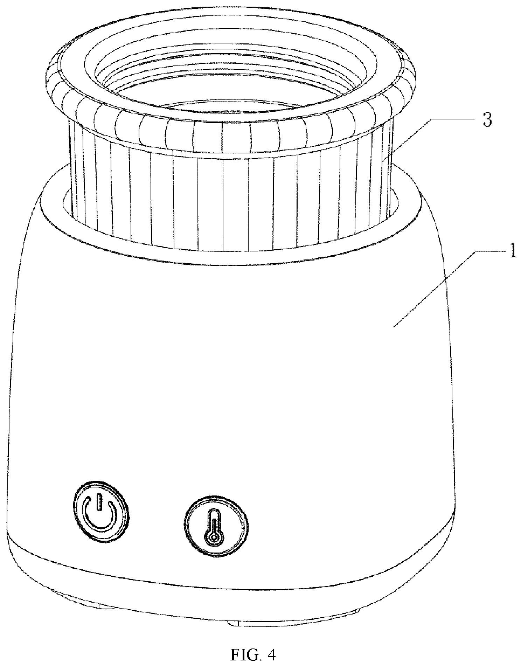

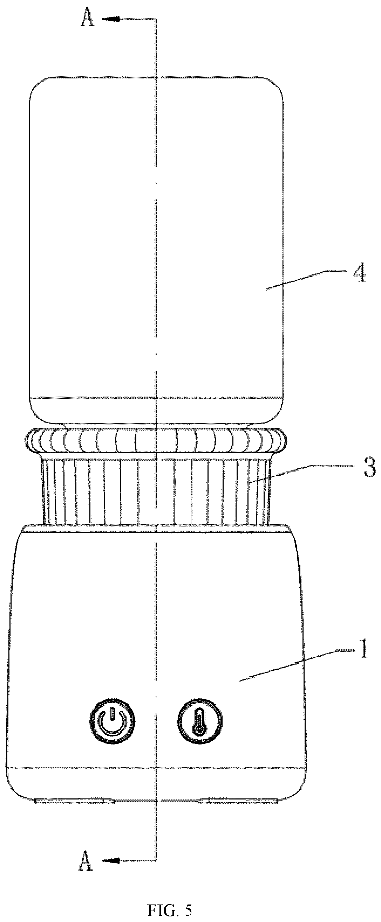

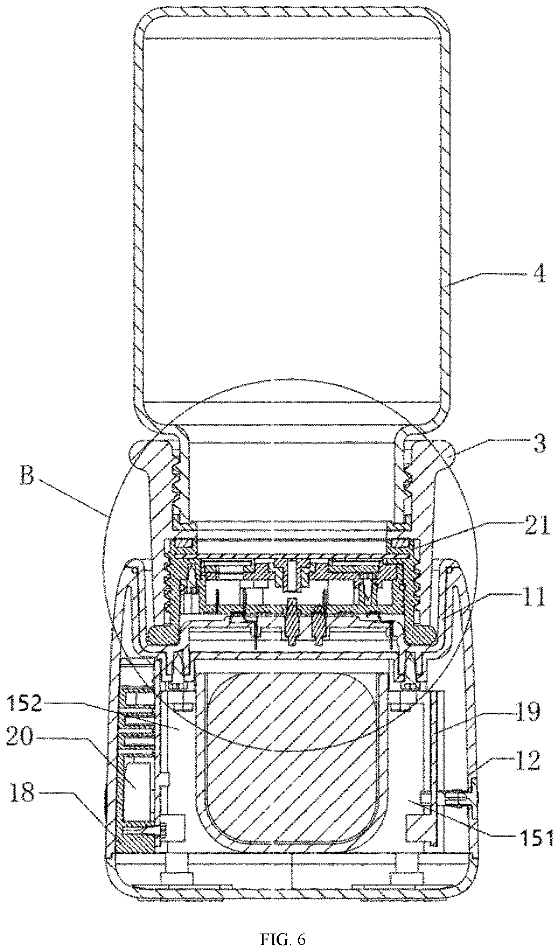

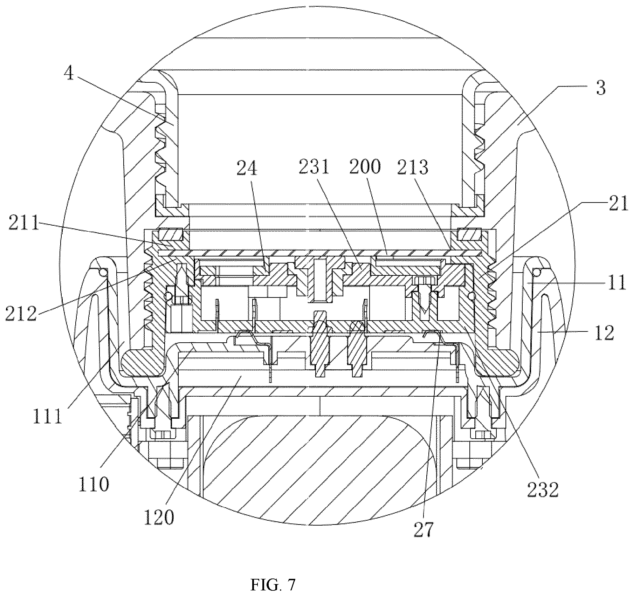

As shown in FIGS. 1-7, the present disclosure provides a milk warmer including a base assembly 1 and a heating assembly 2. A first end of the heating assembly 2 is connected to a feeding bottle 4. A second end of the heating assembly 2 is detachably connected to the base assembly 1. The heating assembly 2 includes a heat conduction component 200. The heat conduction component 200 directly contacts a liquid medium in the feeding bottle 4. The liquid medium in the feeding bottle 4 is heated by directly heating the heat conduction component 200. When the heat conduction component 200 heats up, the liquid medium in the feeding bottle 4 which directly contacts the heat conduction component 200 is rapidly heated to reach a temperature suitable for drinking, thereby greatly improving heating efficiency. Meanwhile, since the heating assembly 2 is detachably connected to the base assembly 1, the heat conduction component 200 directly contacting the liquid medium in the feeding bottle 4 is detachable for washing and cleaning or directly disinfected in a disinfection cabinet, which eliminates health dead corners and health risks. The milk warmer further includes an adapter 3. A first end of the adapter 3 is connected to the heating assembly 2. A second end of the adapter 3 is connected to the feeding bottle 4. The milk warmer is adapted to openings of different feeding bottles 4 through the adapter 3, and has a wide range of the application. In addition, the milk warmer has a simple and compact structure, which makes it easy to carry and makes cost low.

Further, the heating assembly 2 further includes a heating sleeve 21. A lower end of the heating sleeve 21 is connected to the base assembly 1. A first annular platform 211 and a second annular platform 212 are disposed on an inner side of the heating sleeve 21. The first annular platform 211 is spaced apart from the second annular platform 212. A first installing position 213 is disposed between the first annular platform 211 and the second annular platform 212. The heat conduction component 200 is installed in the first installing position 213. The heat conduction component 200 is disposed between the first annular platform 211 and the second annular platform 212. The heat conduction component 200 is a plate made of 304 stainless steel or 316 stainless steel, has a good heat conducting effect, and can directly contact with the liquid medium (for example, brewed milk), which is safe and secure.

Further, an annular protrusion 31 is disposed on an inner side of the adapter 3. The annular protrusion 31 abuts against an upper end of the heating sleeve 21. A sealing component 28 is disposed on an upper end of the annular protrusion 31. Specifically, an annular installing groove is disposed on the upper end of the heating sleeve 21. A sealing ring is installed in the annular installing groove. A lower end of the annular protrusion 31 abuts against the sealing ring, ensuring a good sealing performance.

Further, the heating assembly 2 includes a heating unit 22 and a heating inner housing component 23. The heating unit 22 contacts the heat conduction component 200. The heating inner housing component 23 is fixedly connected to the second annular platform 212. The heating inner housing component includes a heating groove 230. The heating unit 22 is installed in the heating groove 230. The heating assembly 2 further includes a heat insulating component 24. The heat insulating component 24 is disposed between the heating inner housing component 23 and the heating unit 22. The heat insulating component 24 is disposed in the heating groove 230. In a specific application, the heating unit 22 is a circular ring, and the heat insulating component 24 is made of silicone, which has a good heat insulation effect, preventing the heating inner housing component 23 connected to the heating unit 22 from being deformed or damaged when a temperature of the heating unit 22 is too high.

Further, the heating inner housing component 23 includes a heating upper shell 231 and a heating lower shell 232. The heating lower shell 232 is fixedly connected to the heating upper shell 231. The heating lower shell 232 is fixedly connected to the second annular platform 212. Specifically, the heating upper shell 231 and the heating lower shell 232 define an accommodation space, which facilitates a wire layout. Both of the heating upper shell 231 and the heat insulating component 24 respectively define at least one hole, thereby facilitating heat dissipation.

Further, the milk warmer further includes a temperature sensing component 25. A protective sleeve 26 is sleeved on an outer side of the temperature sensing component 25. The protective sleeve 26 may be made of silicone. An upper end of the temperature sensing component 25 is connected to the heat conduction component 200. At least one installing hole configured to install the temperature sensing component 25 and the protective sleeve 26 is defined on the heating upper shell 231. Specifically, the least one installing hole configured to install the temperature sensing component 25 and the protective sleeve 26 is a counter bore, and the upper end of the temperature sensing component 25 is directly connected to a bottom surface of the heat conduction component 200, making a temperature measurement accurate.

Further, the base assembly 1 includes a base upper shell 11. The base upper shell 11 includes a protrusion 110. The protrusion 110 is extended into the heating sleeve 21. An annular groove 111 is defined on an inner side of the base upper shell 11. A bottom end of the heating sleeve 21 is extended into the annular groove 111. The bottom end of the heating sleeve 21 is extended into the annular groove 111, so that the heating sleeve 21 is stable and is easily disassembled. When the heating sleeve 21 needs to be disassembled, the heating assembly 2 is directly rotated and pulled out to be separated from the base assembly 1.

Further, a plurality of conductive terminals 14 are disposed on the base upper shell 11. A conductive ring plate 27 is disposed on the heating lower shell 232. The conductive ring plate 27 is connected to the plurality of conductive terminals 14. The conductive ring plate 27 is connected to the heating unit 22 and the temperature sensing component 25. Specifically, the plurality of conductive terminals 14 may have different structures and are spaced apart from each other along a radial direction of the base upper shell 11, and the conductive ring plate 27 is correspondingly disposed on the heating lower shell 232. When the heating assembly 2 is rotated to different positions, the plurality of conductive terminals 14 are stably connected to the conductive ring plate 27, thereby ensuring a stable electrical connection between the temperature sensing component 25 and the heating unit 22.

Further, the base assembly 1 includes a base middle shell 12, a base lower shell 13, a battery compartment 15, and a battery 16. The battery 16 is disposed in the battery compartment 15. The base lower shell 13 and the battery compartment 15 are fixedly connected to the base middle shell 12. An inner concave portion 120 is disposed on an inner side of the base middle shell 12. The base upper shell 11 is extended into the inner concave portion 120. Specifically, an opening of the battery compartment 15 is disposed upward to facilitate an installation of the battery 16, and the base assembly 1 includes the base middle shell 12, the base lower shell 13, and the base upper shell 11, which facilitates processing, manufacturing and assembling.

Further, a second installing position 151 is disposed on a first side of the battery compartment 15. The base assembly 1 includes a control module 19. The control module 19 is disposed in the second installing position 151. The control module 19 is connected to the battery 16. A third installing position 152 is disposed on a second side of the battery compartment 15. The base assembly 1 includes a lamp plate 17 and a lamp plate bracket 18. The lamp plate 17 is disposed in the third installing position 152. The lamp plate bracket 18 is disposed on a front end of the lamp plate 17. The lamp plate 17 is connected to the control module 19. A button 20 is disposed on an outer side of the base middle shell 12. The button 20 is connected to the lamp plate 17.

The milk warmer of the present disclosure includes the base assembly 1 and the heating assembly 2. The heating assembly 2 includes the heat conduction component 200. The heat conduction component 200 directly contacts the liquid medium in the feeding bottle 4. The liquid medium in the feeding bottle 4 is heated by directly heating the heat conduction component 200. When the heat conduction component 200 heats up, the liquid medium in the feeding bottle 4 directly contacting the heat conduction component 200 is rapidly heated to reach the temperature suitable for drinking, thereby greatly improving heating efficiency. Meanwhile, since the heating assembly 2 is detachably connected to the base assembly 1, the heat conduction component 200 directly contacting the liquid medium in the feeding bottle 4 is detachable for washing and cleaning or being directly disinfected in a disinfection cabinet, which eliminates health dead corners and health risks. The milk warmer further includes the adapter 3. The milk warmer is adapted to openings of different feeding bottles 4 through the adapter 3, and has a wide range of the application. In addition, the milk warmer has a simple and compact structure, which makes it easy to carry and makes cost low.

## Claims

1. A milk warmer, comprising:
a base assembly (1);
a heating assembly (2); and
an adapter (3);
wherein the heating assembly (2) is connected to a feeding bottle (4); the heating assembly (2) comprises a heat conduction component (200); the heat conduction component (200) directly contacts a liquid medium in the feeding bottle (4);
wherein a first end of the adapter (3) is connected to the heating assembly (2); a second end of the adapter (3) is connected to the feeding bottle (4);
the heating assembly (2) further comprises a heating sleeve (21); a lower end of the heating sleeve (21) is connected to the base assembly (1);
**characterised in that**:
a first annular platform (211) and a second annular platform (212) are disposed on an inner side of the heating sleeve (21);
wherein the first annular platform (211) is spaced apart from the second annular platform (212); a first installing position (213) is disposed between the first annular platform (211) and the second annular platform (212); the heat conduction component (200) is installed in the first installing position (213);
the heating assembly (2) is detachably connected to the base assembly (1), wherein the heating assembly (2) further comprises a heating unit (22) and a heating inner housing component (23); the heating unit (22) contacts the heat conduction component (200); the heating inner housing component (23) is fixedly connected to the second annular platform (212); the heating inner housing component (23) comprises a heating groove (230); the heating unit (22) is installed in the heating groove (230);
wherein the heating assembly further comprises a heat insulating component (24); the heat insulating component (24) is disposed between the heating inner housing component (23) and the heating unit (22); the heat insulating component (24) is disposed in the heating groove (230).

2. The milk warmer according to claim 1, wherein an annular protrusion (31) is disposed on an inner side of the adapter (3); the annular protrusion (31) abuts against an upper end of the heating sleeve (21); a sealing component (28) is disposed on an upper end of the annular protrusion (31).

3. The milk warmer according to claim 1, wherein the heating inner housing component (23) comprises a heating upper shell (231) and a heating lower shell (232); the heating lower shell (232) is fixedly connected to the heating upper shell (231); the heating lower shell (232) is fixedly connected to the second annular platform (212).

4. The milk warmer according to claim 3, wherein the milk warmer further comprises a temperature sensing component (25); a protective sleeve (26) is sleeved on an outer side of the temperature sensing component (25);
wherein an upper end of the temperature sensing component (25) is connected to the heat conduction component (200); at least one installing hole configured to install the temperature sensing component (25) and the protective sleeve (26) is defined on the heating upper shell (231).

5. The milk warmer according to any of claims 1 to 4, wherein the base assembly (1) comprises a base upper shell (11); the base upper shell (11) comprises a protrusion (110); the protrusion (110) is extended into the heating sleeve (21); an annular groove (111) is defined on an inner side of the base upper shell (11); a bottom end of the heating sleeve (21) is extended into the annular groove (111).

6. The milk warmer according to claim 5, wherein a plurality of conductive terminals (14) are disposed on the base upper shell (11); a conductive ring plate (27) is disposed on the heating lower shell (232); the conductive ring plate (27) is connected to the plurality of conductive terminals (14); the conductive ring plate (27) is connected to the heating unit (22) and the temperature sensing component (25).

7. The milk warmer according to claim 6, wherein the base assembly (1) comprises a base middle shell (12), a base lower shell (13), a battery compartment (15), and a battery (16); the battery (16) is disposed in the battery compartment (15); the base lower shell (13) and the battery compartment (15) are fixedly connected to the base middle shell (12); an inner concave portion (120) is disposed on an inner side of the base middle shell (12); the base upper shell (11) is extended into the inner concave portion (120).

8. The milk warmer according to claim 7, wherein a second installing position (151) is disposed on a first side of the battery compartment (15); the base assembly (1) comprises a control module (19); the control module (19) is disposed in the second installing position (151);
wherein the control module (19) is connected to the battery (16);
wherein a third installing position (152) is disposed on a second side of the battery compartment (15); the base assembly (1) comprises a lamp plate (17) and a lamp plate bracket (18); the lamp plate (17) is disposed in the third installing position (152); the lamp plate bracket (18) is disposed on a front end of the lamp plate (17);
wherein the lamp plate (17) is connected to the control module (19);
wherein a button (20) is disposed on an outer side of the base middle shell (12); the button (20) is connected to the lamp plate (17).

## Patentansprüche

1. Ein Milcherwärmer, umfasst:
eine Basisbaugruppe (1);
eine Heizbaugruppe (2); und
ein Adapter (3);
wobei die Heizbaugruppe (2) mit einer Fütterungsflasche (4) verbunden ist; die Heizbaugruppe (2) einer Wärmeleitungskomponente (200) umfasst, die direkt in Kontakt mit einem flüssigen Medium in der Fütterungsflasche (4) steht;
wobei ein erstes Ende des Adapters (3) mit der Heizbaugruppe (2) verbunden ist; ein zweites Ende des Adapters (3) mit der Fütterungsflasche (4) verbunden ist;
wobei die Heizbaugruppe (2) außerdem einer Heizhülse (21) umfasst; ein unteres Ende der Heizhülse (21) mit der Basisbaugruppe (1) verbunden ist; **gekennzeichnet dadurch, dass** eine erste ringförmige Plattform (211) und eine zweite ringförmige Plattform (212) auf einer Innenseite der Heizhülse (21) angeordnet sind;
wobei die erste ringförmige Plattform (211) von der zweiten ringförmigen Plattform (212) getrennt ist; eine erste Einbauposition (213) zwischen der ersten ringförmigen Plattform (211) und der zweiten ringförmigen Plattform (212) angeordnet ist; die Wärmeleitungskomponente (200) in der ersten Einbauposition (213) installiert wird;
wobei die Heizbaugruppe (2) abnehmbar mit der Basisbaugruppe (1) verbunden ist, die Heizbaugruppe (2) zusätzlich eine Heizeinheit (22) und eine innere Heizgehäusekomponente (23) umfasst; die Heizeinheit (22) die Wärmeleitungskomponente (200) berührt; die innere Heizgehäusekomponente (23) fest mit der zweiten ringförmigen Plattform (212) verbunden ist; die innere Heizgehäusekomponente (23) einer Heizrille (230) umfasst; die Heizeinheit (22) in der Heizrille (230) installiert ist;
wobei die Heizbaugruppe außerdem eine wärmeisolierende Komponente (24) umfasst; die wärmeisolierende Komponente (24) sich zwischen der inneren Heizgehäusekomponente (23) und der Heizeinheit (22) befindet; Die wärmeisolierende Komponente (24) in der Heizrille (230) angebracht wird.

2. Der Milcherwärmer gemäß Anspruch 1, wobei ein ringförmiger Vorsprung (31) auf einer Innenseite des Adapters angebracht wird (3); wobei der ringförmige Vorsprung (31) an ein oberes Ende der Heizhülse (21) stößt; eine Abdichtungskomponente (28) an einem oberen Ende des ringförmigen Vorsprungs angebracht (31) wird.

3. Der Milcherwärmer gemäß Anspruch 1, wobei die innere Heizgehäusekomponente (23) eine Heizoberschale (231) und eine heizenden Unterschale (232) umfasst; die heizende Unterschale (232) fest mit der Heizoberschale (231) verbunden ist; die heizenden Unterschale (232) fest mit der zweiten ringförmigen Plattform (212) verbunden ist.

4. Der Milcherwärmer gemäß Anspruch 3, wobei der Milchwärmer zusätzlich eine temperaturmessende Komponente (25) umfasst; eine Schutzhülse (26) an einer Außenseite der temperaturmessenden Komponente (25) ummantelt ist;
wobei ein oberes Ende der temperaturmessenden Komponente (25) mit der Wärmeleitungskomponente (200) verbunden ist; mindestens ein Einbauloch, das zur Installation der temperaturmessenden Komponente (25) und der Schutzhülse (26) konfiguriert ist, auf der Heizoberschale (231) definiert ist.

5. Der Milchwärmer gemäß einem der Ansprüche 1 bis 4, wobei die Basisbaugruppe (1) eine Oberschale der Basis (11) umfasst; die Oberschale der Basis (11) einen Vorsprung (110) umfasst, der in die Heizhülse (21) verlängert wird; eine ringförmige Rille (111) an einer Innenseite der Oberschale der Basis (11) definiert ist; ein unteres Ende der Heizhülse (21) in die ringförmige Rille (111) verlängert wird.

6. Der Milchwärmer gemäß Anspruch 5, wobei mehrere leitfähige Endpunkte (14) auf der Oberschale der Basis (11) angeordnet sind; eine leitfähige Ringplatte (27) auf der heizenden Unterschale (232) angebracht wird; die leitfähige Ringplatte (27) mit der Vielzahl der leitfähigen Endpunkte (14) verbunden ist; die leitfähige Ringplatte (27) mit der Heizeinheit (22) und der temperaturmessenden Komponente (25) verbunden ist.

7. Der Milchwärmer gemäß Anspruch 6, wobei die Basisbaugruppe (1) eine Mittelschale der Basis (12), eine Unterschale der Basis (13), ein Batteriefach (15) und eine Batterie (16) umfasst; wobei die Batterie (16) im Batteriefach (15) deponiert wird; die Unterschale der Basis (13) und das Batteriefach (15) fest mit der Mittelschale der Basis (12) verbunden sind; ein innerer konkaver Teil (120) einer Innenseite der Mittelschale der Basis (12) zugeordnet ist; die Oberschale der Basis (11) in den inneren konkaven Teil (120) verlängert wird.

8. Der Milchwärmer nach Anspruch 7, wobei eine zweite Einbauposition (151) an einer ersten Seite des Batteriefachs (15) angeordnet ist; die Basisbaugruppe (1) ein Steuerungsmodul (19) umfasst, das in der zweiten Einbauposition (151) angeordnet ist;
wobei das Steuerungsmodul (19) mit der Batterie (16) verbunden ist;
wobei eine dritte Einbauposition (152) an einer zweiten Seite des Batteriefachs (15) angeordnet ist; die Basisbaugruppe (1) eine Lampenplatte (17) und eine Lampenplattenhalterung (18) umfasst; die Lampenplatte (17) in der dritten Einbauposition (152) angeordnet ist; die Lampenplattenhalterung (18) am vorderen Ende der Lampenplatte (17) angeordnet ist;
wobei die Lampenplatte (17) mit dem Steuerungsmodul (19) verbunden ist;
wobei eine Taste (20) an einer Außenseite des Mittelschale der Basis (12) angebracht ist; die Taste (20) mit der Lampenplatte (17) verbunden ist.

## Revendications

1. Un chauffe-lait, comprenant :
un ensemble de base (1) ;
un ensemble chauffant (2) ; et
un adaptateur (3) ;
où l'ensemble chauffant (2) est relié à un biberon (4) ; l'ensemble de chauffage (2) comprend une composante de conduction thermique (200) ; la composante de conduction thermique (200) entre en contact direct avec un milieu liquide dans le biberon (4) ;
où une première extrémité de l'adaptateur (3) est connectée à l'ensemble chauffant (2) ; une seconde extrémité de l'adaptateur (3) est reliée au biberon (4) ;
où l'ensemble chauffant (2) comprend en outre un douille chauffant (21) ; une extrémité inférieure du douille chauffant (21) est reliée à l'ensemble de base (1) ; **caractérisé par le fait qu'**une première plateforme annulaire (211) et une seconde plateforme annulaire (212) sont disposées sur un côté intérieur du douille chauffant (21) ;
où le première plateforme annulaire (211) est espacée du second plateforme annulaire (212) ; une première position d'installation (213) est disposée entre la première plateforme annulaire (211) et la seconde plateforme annulaire (212) ; la composante de conduction thermique (200) est installée à la première position d'installation (213) ;
où l'ensemble chauffant (2) est détachable relié à l'ensemble de base (1), où l'ensemble chauffant (2) comprend en outre une unité chauffante (22) et un boîtier intérieur chauffant (23) ; l'unité de chauffage (22) contacte la composante de conduction thermique (200) ; le boîtier intérieur chauffant (23) est fixement reliée à la seconde plateforme annulaire (212) ; le composant intérieur du boîtier intérieur chauffant (23) comprend une rainure de chauffage (230) ; l'unité chauffante (22) est installée dans la rainure de chauffage (230) ;
où l'ensemble chauffant comprend en outre un composant isolant thermique (24) ; le composant isolant thermique (24) est disposé entre le boîtier intérieur chauffant (23) et l'unité chauffante (22) ; le composant isolant thermique (24) est disposé dans la rainure de chauffage (230).

2. Le chauffe-lait selon la revendication 1, où une protubérance annulaire (31) est disposée sur une face interne de l'adaptateur (3) ; la saillie annulaire (31) joute contre une extrémité supérieure du douille chauffant (21) ; un composant d'étanchéité (28) est disposé à l'extrémité supérieure de la protubérance annulaire (31).

3. Le chauffe-lait selon la revendication 1, où le boîtier intérieur chauffant (23) comprend une coque supérieure chauffante (231) et une coque inférieure chauffante (232) ; la coque inférieure chauffante (232) est fixement reliée à la coque supérieure chauffante (231) ; la coque inférieure chauffante (232) est fixement reliée à la seconde plateforme annulaire (212).

4. Le chauffe-lait selon la revendication 3, où le chauffe-lait comprend en outre un composant de détection de température (25) ; une gaine de protection (26) est enfilée sur un côté extérieur du composant de détection de température (25) ;
où une extrémité supérieure de la composante de détection de température (25) est connectée à la composante de conduction thermique (200) ; au moins un trou d'installation configuré pour installer le composant de détection de température (25) et le gaine de protection (26) est défini sur la coque supérieure de chauffage (231).

5. Le chauffe-lait selon l'une des revendications 1 à 4, où l'ensemble de base (1) comprend une coque supérieure de base (11) ; la coque supérieure de base (11) comprend une protubérance (110) ; la protubérance (110) est prolongée dans la douille chauffant (21) ; un sillon annulaire (111) est défini sur un côté intérieur de la coque supérieure de base (11) ; une extrémité inférieure du douille chauffant (21) est prolongée dans la rainure annulaire (111).

6. Le chauffe-lait selon la revendication 5, où une pluralité de bornes conductrices (14) sont disposées sur la coque supérieure de base (11) ; une plaque annulaire conductrice (27) est disposée sur la coque inférieure chauffante (232) ; la plaque annulaire conductrice (27) est reliée à la pluralité de bornes conductrices (14) ; la plaque annulaire conductrice (27) est reliée à l'unité de chauffage (22) et au composant de détection de température (25).

7. Le chauffe-lait selon la revendication 6, où l'ensemble de base (1) comprend une coque centrale de base (12), une coque inférieure de base (13), un compartiment de batterie (15) et une batterie (16) ; la batterie (16) est disposée dans le compartiment de batterie (15) ; la coque inférieure de base (13) et le compartiment de batterie (15) sont fixement reliés à la coque centrale de base (12) ; une partie interne concave (120) est disposée sur une face intérieure de la coque centrale de base (12) ; la coque supérieure de base (11) s'étend dans la partie interne concave (120).

8. Le chauffe-lait selon la revendication 7, dans lequel une deuxième position d'installation (151) est disposée sur un premier côté du compartiment de batterie (15) ; l'ensemble de base (1) comprend un module de contrôle (19) ; le module de contrôle (19) est disposé dans la deuxième position d'installation (151) ;
où le module de contrôle (19) est connecté à la batterie (16) ;
où une troisième position d'installation (152) est disposée sur un deuxième côté du compartiment de batterie (15) ; l'ensemble de base (1) comprend une plaque de lampe (17) et un support de plaque de lampe (18) ; la plaque de lampe (17) est disposée dans la troisième position d'installation (152) ; le support de plaque de lampe (18) est disposé à l'extrémité avant de la plaque de lampe (17) ;
où la plaque de lampe (17) est connectée au module de contrôle (19) ;
où un bouton (20) est disposé sur le côté extérieur de la coque centrale de base (12) ; le bouton (20) est connecté à la plaque de lampe (17).
